# EUROPÄISCHE PATENTSCHRIFT

(11) **EP 1 481 231 B1**
(45) Veröffentlichungstag und Bekanntmachung des Hinweises auf die Patenterteilung: **09.11.2011**
(21) Anmeldenummer: 03720143.1
(22) Anmeldetag: 05.03.2003
(51) Int. Cl.: G01L 5/28

(54) **BREMSPRÜFSTAND**
BRAKE TEST BENCH
BANC D'ESSAI A FREIN

(30) Priorität: 06.03.2002 DE 10209706
(43) Veröffentlichungstag der Anmeldung: 01.12.2004
(73) Patentinhaber: Femboeck Automotive GmbH, 84524 Neuoetting (DE)
(72) Erfinder: WIMMER, Hermann, 84568 Pleiskirchen (DE)
(74) Vertreter: Naumann, Ulrich
(86) Internationale Anmeldenummer: PCT/DE2003/000723
(87) Internationale Veröffentlichungsnummer: WO 2003/074987

(56) Entgegenhaltungen:
- DE-C- 633 528
- DE-C1- 4 338 172
- DE-C1- 4 338 172
- US-A- 1 874 838
- US-A- 1 874 838

## Beschreibung

Die Erfindung betrifft einen Bremsprüfstand für Kraftfahrzeuge gemäß dem Oberbegriff des Patentanspruchs 1. Ein derartiger Bremsprüfstand ist aus dem Dokument DE-C-633 528 bekannt.

Bremsprüfstände sind seit langem aus der Praxis bekannt. Sie finden Anwendung in Kraftfahrzeug-Reparaturwerkstätten und auch beim TÜV im Rahmen der periodischen Tauglichkeltsprüfung von Kraftfahrzeugen. Üblicherweise wird dort die Funktionsfähigkeit bzw. Wirksamkeit der Bremsen überprüft.

Bei dem aus der Praxis bekannten Stand der Technik gibt es grundsätzlich drei unterschiedliche Verfahren zur Prüfung von Kraftfahrzeugbremsen. So wird bislang mit ganz besonderen Einrichtungen geprüft, nämlich mit Prüfplatten, Prüfrollen oder mittels eines Verzögerungsmessgeräts. Bei der Prüfung mittels Prüfplatten und mittels Verzögerungsmessgerät spricht man von einer dynamischen Prüfung. Bei der Anwendung von Prüfrollen spricht man von einer statischen Prüfung. Der Unterschied zwischen der dynamischen Prüfung und der statischen Prüfung besteht darin, dass bei der Prüfung mit Prüfplatten oder mittels Verzögerungsmessgerät das Fahrzeug bewegt werden muss. Die Prüfplatten und das Verzögerungsmessgerät sind fest angeordnet. Bei der Prüfung mittels Prüfrollen steht dagegen das Fahrzeug und die Prüfrollen drehen sich. Voranstehende Ausführungen machen den Hauptunterschied zwischen den beiden grundsätzlichen Prüfverfahren deutlich.

Bei einem Plattenbremsprüfstand wird mit der Prüfplatte ein Teilausschnitt einer Straße simuliert, wobei die Prüfplatte auf Rollen gelagert ist. Das Fahrzeug fährt über die Prüfplatte, die in Fahrtrichtung über ein Allesselement mit der Umgebung, so beispielsweise mit einer Auffahrplatte, verbunden ist. Wird das Fahrzeug auf der Prüfplatte abgebremst, so werden über das Messelement die beim Bremsen auftretenden Bremskräfte aufgenommen. Der Messvorgang dauert dabei lediglich solange, wie sich das Fahrzeug auf der flächenmäßig begrenzten Prüfplatte befindet. In der Praxis liegt die Messzeit zwischen 0,5 und 1 Sekunde.

Je schneller auf die Prüfplatte aufgefahren wird, desto größer sind die aufgenommenen Bremskräfte. Eine maximal aufzunehmende Bremskraft kann jedoch nicht höher als die Reibung zwischen Reifen und Prüfplatte sein, da ansonsten nämlich die Schlupfgrenze überschritten wird. Beim Plattenbremsprüfstand ist es jedenfalls nachteilig, dass das Messergebnis abhängig von der Auffahrgeschwindigkeit ist. Darüber hinaus lässt sich die Messung nur über einen sehr kleinen zeitlichen Ausschnitt hinweg durchführen, da nämlich die Länge der Bremsplatte begrenzt ist. Letztendlich ist der Plattenbremsprüfstand nur wenig praktikabel, da es nicht nur für einen Laien äußerst schwierig ist, auf den Punkt genau, d.h. exakt beim Befahren der Prüfplatte, mit dem Bremsmanöver zu beginnen. Ein Bremsprüfstand mit einer Bremsplatte ist aus dem Dokument DE-C-43 38 172 bekannt. Diesen Bremsprüfstand ist tragbars ausgebildet.

Der Rollenbremsprüfstand stellt aufgrund seiner konstruktiven Ausgestaltung nichts anderes als eine unendlich lange Straße dar, die durch drehende Rollen simuliert wird. Der Bremsvorgang kann somit über einen beliebig langen Zeitraum getestet werden.

Die Funktionsweise des Rollenbremsprüfstands ergibt sich aus seiner konstruktiven Ausgestaltung. Über einen Prüfstandrahmen fährt das Fahrzeug langsam in den Rollensatz - üblicherweise zwei Rollen - ein, bis es auf den Prüfrollen zum Stehen kommt. Die Prüfrollen werden durch einen Elektromotor, meist über Ketten, angetrieben. Der Elektromotor ist dabei üblicherweise pendelnd gelagert. Wird das Rad abgebremst, muss der Elektromotor mehr Kraft aufwenden, um das Rad zu drehen. Diese Kraft wird über einen Sensor, der üblicherweise als Drehmomentstütze ausgebildet ist, aufgenommen.

Bei dem aus der Praxis bekannten Rollenbremsprüfstand handelt es sich um ein statisches System, bei dem das Fahrzeug steht. Die Rollen lassen sich beliebig lange drehen, so dass das Bremssystem des Fahrzeugs in nahezu jedem Zustand getestet werden kann. Im Gegensatz zu dem Plattenprüfstand ist die Prüfung keineswegs zeitlich begrenzt und jeder Fahrzustand - entsprechend dem Antrieb der Prüfrollen - kann beliebig wiederholt werden. Jedoch lässt sich die Bremse - ähnlich wie beim Plattenbremsprüfstand - nicht über den Haftwert der Rollenoberfläche hinaus austesten, da dann nämlich die Schlupfgrenze überschritten wird.

Bei einem konventionellen Rollenbremsprüfstand ist jedoch nachteilig, dass die Reifen unmittelbar auf zwei Rollen laufen und von den Rollen eingedrückt bzw. gewalgt werden. Dies verfälscht das Prüfergebnis aufgrund unterschiedlicher Haftreibungen der jeweilige Situationen, nämlich gewichtsabhängig, so dass der Roflenbremsprüfstand insoweit nachteilig erscheint.

Aus der Praxis ist des Weiteren bekannt, die Überprüfung der Bremswirkung eines Fahrzeugs mittels Bremsverzögerungsmessgeräten zu ermitteln. Letztendlich arbeitet ein Verzögerungsmessgerät mit einer beschleunigten Masse bzw. einem Gewicht, welches auf Rollen gelagert und über eine Feder mit einem Rahmen verbunden ist. Bei der Messung liegt das Messgerät horizontal in Bewegungsrichtung. Beim Bremsen wird das Gewicht - hier das Kraftfahrzeug - in Fahrtrichtung ausgelenkt. Der Weg wird gemessen und in Verzögerung umgerechnet. Ebenso ist zu diesem Zwecke ein Beschleunigungssensor verwendbar, der nach dem gleichen Grundprinzip arbeitet. Bei eintretender Bremsverzögerung wirken die gleichen Kräfte wie das Eigengewicht des Prüfkörpers selbst.

Das Verzögerungsmessgerät Ist in der Praxis problematisch, da damit nur die Gesamtverzögerung des Fahrzeugs, jedoch nicht die Bremskraftverteilung auf die einzelnen Räder, ermittelbar ist. Folglich wird diese Art der Prüfung nur in Ausnahmefällen angewendet, nämlich regelmäßig nur dann, wenn aufgrund von technischen Gegebenheiten ein Fahrzeug nicht gemäß den beiden voranstehenden Methoden getestet werden kann.

Im Lichte der voranstehenden Ausführungen liegt der vorliegenden Erfindung nunmehr die Aufgabe zugrunde, einen Bremsprüfstand derart auszugestalten und weiterzubilden, dass er unter Ausschluss der wesentlichen Nachteile die Vorteile herkömmlicher Prüfmethoden auf sich vereint. Darüber hinaus soll der Bremsprüfstand einfach in der Konstruktion und leicht zu bedienen sein. Schließlich soll es möglich sein, den Bremsprüfstand in Werkstätten oder dergleichen ohne tiefgreifende bauliche Maßnahmen nachrüsten zu können.

Erfindungsgemäß ist die veranstehende Aufgabe durch einen bremsprüfstand mit den Merkmalen des Patentanspruchs 1 gelöst.

Dabei handelt es sich hier um einen Bremsprüfstand mit drehangetriebener Lauffläche, und somit um einen Bremsprüfstand, der statisch arbeitet, bei dem also das Kraftfahrzeug steht und die Lauffläche der Abrolleinrichtung eine quasi endlose Straße darstellt. Die Abrolleinrichtung stellt in sich eine kompakte Einheit dar, die längs der Fahrtrichtung zumindest geringfügig beweglich gelagert ist. Zur Ermittlung der Bremskraft wird die beim Bremsen zwischen der Abrolleinrichtung und einem vorgebbaren Fixpunkt wirkende Kraft gemessen, wobei dazu jedwede Kraftaufnehmer verwendbar sind. Die Abrolleinrichtung funktioniert demnach ähnlich wie bei einem Rollenbremsprüfstand, auf den nämlich die Räder des Fahrzeugs positioniert werden. Dabei sind die Nachteile des konventionellen Rollenbremsprüfstands insoweit eliminiert, als die Funktionsweise beim Plattenbremsprüfstand dadurch realisiert ist, dass die Abrolleinrichtung als besonders gelagerte Einheit ausgebildet ist, nämlich ähnlich der Prüfplatte beim Plattenbremsprüfstand. So lässt sich nämlich die Abrolleinrichtung insgesamt in Fahrtrichtung zumindest geringfügig verlagern, wobei dieser Weg so bemessen ist, dass zur Ermittlung der Bremskraft die beim Bremsen zwischen der Abrolleinrichtung und einem vorgebbaren Fixpunkt wirkende Kraft - im Umfange der räumlichen Verlagerung der Abrolleinrichtung - gemessen wird. Ähnlich wie bei einem konventionellen Plattenbremsprüfstand wirkt zwischen der Abrolleinrichtung und dem vorgebbaren Fixpunkt eine Messeinrichtung zur Kraftermittlung.

Im Hinblick auf eine beliebige Nachrüstbarkeit von Werkstätten, TÜV-Prüfeinrichtungen oder dergleichen, ist die Abrolleinrichtung gemeinsam mit dem Rahmen handhabbar ist. Zur Ermittlung der Bremskraft wird die beim Bremsen zwischen dem Rahmen und der Abrolleinrichtung wirkende Kraft gemessen, so dass eine solche Abrolleinrichtung mit fest zugeordnetem Rahmen beliebig auf dem Boden einer Werkstatt positionierbar ist. So lässt sich der erfindungsgemäße Bremsprüfstand beispielsweise mit einer Bauhöhe von 50 mm variabel einsetzen, wobei lediglich sicher zu stellen ist, dass er sich am Boden abstützen kann. Bei kleiner Bauweise ist es ohne weiteres auch möglich, eine entsprechende Ausnehmung im Boden vorzusehen und den Rahmen in den Boden teilweise oder insgesamt zu integrieren.

Des Weiteren Ist es auch möglich, den gesamten Bremsprüfstand bzw. die Abrolleinrichtung mit dem Rahmen innerhalb einer Bodenausnehmung zu lagern.

Nun könnte man den Rahmen derart ausgestalten, dass innerhalb des Rahmens jeweils zwei Abrolleinnchtungen für beide Räder einer Achse vorgesehen sind. Zur Realisierung einer besonders kompakten Bauweise ist es jedoch von Vorteil, wenn je Rad einer Achse eine separate Abrolleinrichtung vorgesehen ist, die wiederum jeweils einen eigenen Rahmen aufweist. Somit könnte man für beide Räder einer Achse zwei separate Abrolleinrichtungen mit entsprechenden Rahmen vorsehen, wobei man diese beiden Abrolleinrichtungen gemeinsam mit deren Rahmen auf dem Boden oder in dem Boden anordnen kann. Ein variabler Einsatz ist gegeben.

Im Rahmen einer ganz besonders vorteilhaften Ausgestaltung, insbesondere zur Vermeidung einer Deformation bzw. Walgung des Rades bei der eigentlichen Bremsprüfung, umfasst die Abrolleinrichtung mindestens zwei Rollen bzw. Walzen, wobei über bzw. um die Rollen ein als Endlosband ausgeführtes Laufband läuft. Mit Hilfe des Bandes lässt sich eine Straße Ideal Imitieren, so dass die Wirkung der Bremse über eine endlos ausgelegte Straße hinweg getestet werden kann. Zur Stimulation eines mehr oder weniger glatten Strat3enbelages ist es von weiterem Vorteil, wenn die Abrolleinrichtung drei oder mehrere Rollen bzw. Walzen umfasst, so dass Unebenheiten im Wesentlichen vermieden sind.

Bereits zuvor ist erwähnt worden, dass die Rollen vorzugsweise In einem Rahmen angeordnet sind. In weiter vorteilhafter Weise sind die Rollen seitlich im Rahmen gelagert und dabei derart angeordnet, dass sie - innerhalb des Rahmens - bodenfrei laufen. Ebenso ist es möglich, die gesamte Anordnung der Abrolleinrichtung mit Ihrem Rahmen abermals auf Rollen bzw. Walzen zu lagern, um deren sichere Verschiebbarkeit, beispielsweise Innerhalb einer Bodenausnehmung - gegen eine Kraftmesseinrichtung zu gewährleisten. Dazu können die Rollen - seitlich im Rahmen - In Wälzlagern geführt sein. Die Realisierung einer Gleitführung ist ebenfalls denkbar und in konstruktiver Hinsicht besonders einfach.

Der erfindungsgemäße Bremsprüfstand arbeitet vom Grundprinzip her ähnlich dem konventionellen Rollenbremsprüfstand. Folglich ist es erforderlich, dass das Fahrzeug mit dem jeweils zu prüfenden Rad auf die Abrolleinrichtung fährt, wonach diese angetrieben wird. Wenngleich das Kraftfahrzeug auf der Stelle stehen bleibt, werden die Räder in Drehbewegung verbracht, wodurch eine Beschleunigung des Fahrzeugs simuliert wird. Aus Sicherheitsgründen, insbesondere damit beim Bremsen das Rad nicht rückwärts von der Abrolleinrichtung gedrückt bzw. geschoben wird, ist im Rahmen einer ganz besonders vorteilhaften Ausgestaltung In Laufrichtung gesehen vor der ersten Rolle, d.h. hinter dem auf der Abrolleinrichtung befindlichen Rad, eine freilaufende Stützrolle angeordnet, die sich - gegenüber der Abrolleinrichtung erhaben - gegen das Rad beim Bremsen abstützt bzw. gegen die sich das Rad beim Bremsen abstützen kann. Eine sichere Positionierung des Rads auf dem Prüfstand ist damit gewährleistet.

Im Konkreten könnte die Stützrolle über seitliche Stützarme, vorzugsweise über elastische bzw. federkraftbeaufschlagte Stützarme, verfügen, die die Stützrolle in ihrer Stützposition im erhabenen Zustand derart halten, dass die Stützrolle vom Reifen In Fahrtrichtung unter Überwindung der elastischen Kraft bzw. Federkraft abgesenkt wird und sich nach dem Überfahren automatisch In die Stützposition aufrichtet. Entgegen der Fahrtrichtung ist die Stützrolle bzw. sind die Stützarme arretiert und lassen sich nicht aus der Stützposition herunterdrücken. Da die Stützrolle drehbar gelagert ist, bietet sie ein geeignetes Widerlager tür das drehende Rad beim Bremsen.

Ebenso ist es denkbar, dass die Stützrolle in einem abgesenkten Zustand überfahrbar ist. Sobald das Rad auf der Abrolleinrichtung positioniert ist, könnte die Stützrolle betätigt werden, so dass diese in die Stützposition hochfährt und gegebenenfalls dort arretiert. Die Funktionsweise beim Bremsen des Rades gestaltet sich entsprechend den voranstehenden Ausführungen. Insoweit sei noch angemerkt, dass die Stützrolle und die die Stützrolle tragenden Stützarme über eine ganz besondere Mechanik, vorzugsweise über einen Schneckenantrieb, von der abgesenkten Position in die hochgefahrene Stützposition verbringbar ist. Sonstige mechanische Ausführungen sind denkbar.

Zuvor ist bereits ausgeführt worden, dass die beim Bremsen zwischen der Abrolleinrichtung und einem vorgebbaren Fixpunkt wirkende Kraft messbar ist. Sofern die Abrolleinrlchtung innerhalb eines Rahmens angeordnet ist und sofern der Rahmen die Abrolielnrichtung bzw. den Bremsprüfstand insgesamt begrenzt, könnte insbesondere im Hinblick auf eine kompakte Bauweise die Kraftaufnahme zwischen den Rollen und dem Rahmen erfolgen. Dazu ist es erforderlich, dass die Rollen unter Zwischenschaltung einer Kraftmesseinrichtung innerhalb des Rahmens zumindest geringfügig bewegbar bzw. in Längsrichtung verschiebbar angeordnet sind. Jedenfalls lässt sich die Kraftaufnahme an beliebigen Stellen zwischen den Rollen und dem Rahmen vornehmen, wobei eine Verschiebbarkeit der Rollen innerhalb des Rahmens gewährleistet sein muss.

Ebenso ist es denkbar, dass die Kraftaufnahme innerhalb der Rollen erfolgt, wobei sich die Rollen wiederum gegen den Rahmen abstützen. Eine entsprechende Lagerung ist dabei vorzusehen. Schließlich könnte die Kraftaufnahme in oder an den Lagern der Rollen erfolgen, wobei entsprechende Kraftaufnehmer integrale Bestandteile der Lager sein könnten.

In Bezug auf den Antrieb der Abrolleinrichtung ist sicherzustellen, dass mindestens eine der Rollen drehangetrieben ist. Die andere Rolle bzw. die anderen Rollen könnten - über das Laufband angetrieben, frei drehbar gelagert sein. Jedenfalls könnte zum Antrieb der einen Rolle - oder zum Antrieb mehrerer Rollen - ein Elektromotor vorgesehen sein, der auf die eine oder die mehreren Rollen mittels Kette, Antriebsriemen oder dergleichen greift. Jedwede nur denkbare Kraftübertragungen sind realisierbar, wobei der Elektromotor vorzugsweise im Bereich zwischen den Rollen oder im Bereich unter den Rollen angeordnet ist. Da sowohl die Abrolleinrichtung, d.h. die Rollen als solche, als auch der Elektromotor innerhalb des Rahmens angeordnet sind, gibt dieser die maximalen Abmessungen, so auch die Höhe, des gesamten Bremsprüfstands vor.

Insbesondere im Rahmen einer besonders flachen Ausgestaltung des Bremsprüfstands ist der Elektromotor in einer der angetriebenen Rollen bzw. in den angetriebenen Rollen angeordnet. Ebenso lassen sich die Rollen derart konstruleren, dass der Elektromotor Integraler Bestandteil der Rolle ist. Insoweit ließe sich die Rolle als Bestandteil des Elektromotors unmittelbar und ohne weiterreichende Verluste antreiben.

Es gibt nun verschiedene Möglichkeiten, die Lehre der vorliegenden Erfindung auszugestalten und weiterzubilden. Dazu ist einerseits auf die dem Patentanspruch 1 nachgeordneten Patentansprüche und andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung anhand der Zeichnung werden auch Im allgemeinen bevorzugte Ausgestaiturtgen und Weiterbildungen der Lehre erläutert. In der Zeichnung zeigt
- Fig. 1: in einer schematischen Seitenansicht einen Bremsprüfstand mit in der Prüfposition befindlichem Kraftfahrzeug,
- Fig. 2: in einer schematischen Detailansicht einen weiteren Bremsprüfstand mit Rad,
- Fig. 3: in einer schematischen Detailansicht einen weiteren Bremsprüfstand mit Rad und
- Fig. 4: in einer schematischen Detailansicht abermals einen weiteren Bremsprüfstand mit Rad.

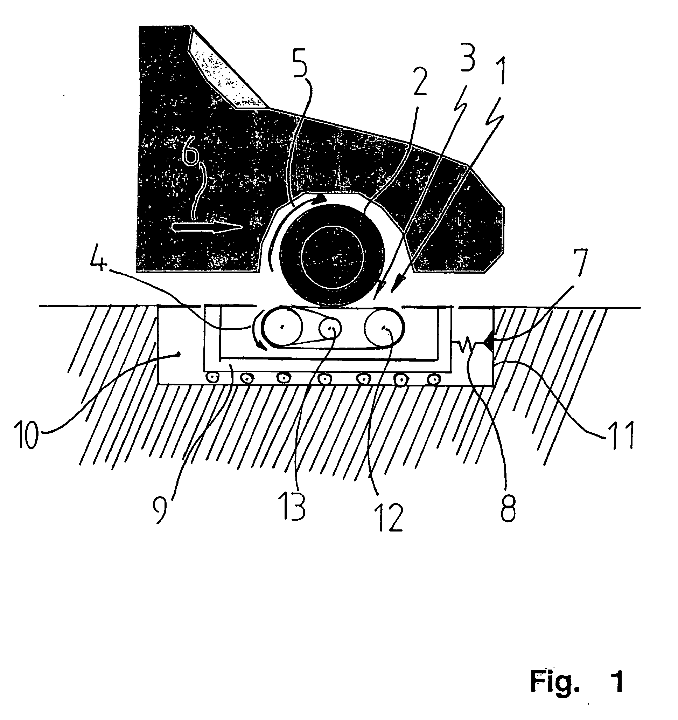

Fig. 1 zeigt in einer schematischen Seitenansicht einen Bremsprüfstand für Kraftfahrzeuge, der als wesentlichen Bestandteil eine Abrolleinrichtung 1 zum Abrollen der Räder 2 umfasst. Die Abrolleinrichtung 1 bildet für das Rad 2 eine Lauffläche 3. Die Lauffläche 3 ist drehangetrieben und blockierbar bzw. bremsbar. Die Drehrichtung der Abrolleinrichtung 1 bzw. deren Lauffläche 3 ist durch einen Pfeil 4 gekennzeichnet. Die Drehrichtung des Rades 2 ist durch einen Pfeil 5 gekennzeichnet. Die Fahrtrichtung des Kraftfahrzeugs kennzeichnet Pfeil 6, wobei das Fahren des Kraftfahrzeugs durch Drehen der Abrolleinrichtung 1 simuliert wird.

An dieser Stelle sei angemerkt, dass stets die beiden Räder einer Achse gleichzeitig geprüft werden. Folglich sind in der Praxis zwei Bremsprüfstände bzw. zwei Abrolleinrichtungen zum gleichzeitigen Prüfen beider Räder erforderlich.

Die Abrolleinrichtung 1 ist längs der Fahrtrichtung 6 zumindest geringfügig beweglich gelagert. Zur Ermittlung der Bremskraft ist die beim Bremsen zwischen der Abrolleinrichtung 1 und einem vorgegebenen Fixpunkt 7 wirkende Kraft messbar. Zur Messung dieser Kraft ist eine Kraftmesseinrichtung 8 vorgesehen, die in Fig. 1 lediglich angedeutet ist. Beliebige Messelemente bzw. Messeinrichtungen lassen sich verwenden.

Bei dem in Fig. 1 gezelgten Bremsprüfstand ist die Abrolleinrichtung 1 in einem Rahmen 9 angeordnet, wobei dieser Rahmen 9 in eine Bodenausnehmung 10 eingesetzt ist. Zwischen dem Rahmen 9 und einer Wandung 11 der Bodenausnehmung 10 ist die Kraftmesseinrichtung 8 angeordnet, so dass diese zwischen dem Rahmen 9 und der Wandung 11 wirkt. Ebenso wäre es denkbar, dass die Kraftmesseinrichtung 8 innerhalb des Rahmens 9 zwischen dort vorgesehenen Rollen 12 und dem Rahmen 9 wirkt.

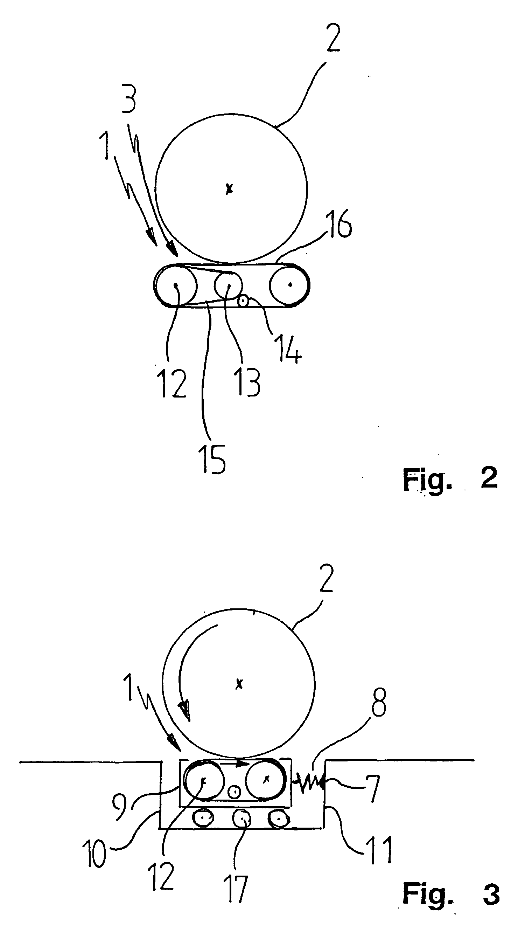

Fig. 2 zeigt in einer schematischen Detail-/Seitenansicht einen weiteren Bremsprüfstand, wobei dort lediglich die Abrolleinrichtung 1 mit zwei Rollen 12, einem eine der beiden Rollen 12 antreibenden Elektromotor 13 und einer Spannrolle 14 mit Riemenantrieb 15 gezeigt sind. Die beiden Rollen 12 sind von einem Laufband 16 umgeben. Das Rad 2 rollt auf dem Laufband 16 ähnlich dem Belag einer Straße endlos ab. Mehrere Rollen 12 können vorgesehen sein, wobei sich dadurch die Oberfläche des Laufbands 16 bzw. die Lauffläche 3 in einem höheren Maße egalisiert. Bei Verwendung mehrerer Rollen 12 können diese im Durchmesser kleiner sein.

Fig. 3 zeigt in einen schematischen Seitenansicht einen weiteren Bremsprüfstand, wobei dort die Abrolleinrlchtung 1 mit den Rollen 12 und dem Rahmen 9 in eine Bodenausnehmung 10 eingesetzt sind. Der gesamte Rahmen 9 stützt sich gegen die Wandung 11 der Bodenausnehmung 10, wobei die Messwerterfassung mittels Kraftmesseinrichtung 8 zwischen dem Rahmen 9 und der Wandung 11 erfolgt. Wie bereits zuvor ausgeführt, kann die Messwerterfassung ohne weiteres auch zwischen den Rollen 12 bzw. der Abrolleinrichtung 1 und dem Rahmen 9 erfolgen.

Fig. 3 zeigt des Weiteren andeutungsweise, dass der gesamte Rahmen 9 mit der Abrolleinrichtung 11 und den dazugehörenden Rollen 12 auf einem besonderen Rollenlager 17 gelagert ist, um nämlich eine einfache Verlagerung des Rahmens 9 bewerkstelligen zu können.

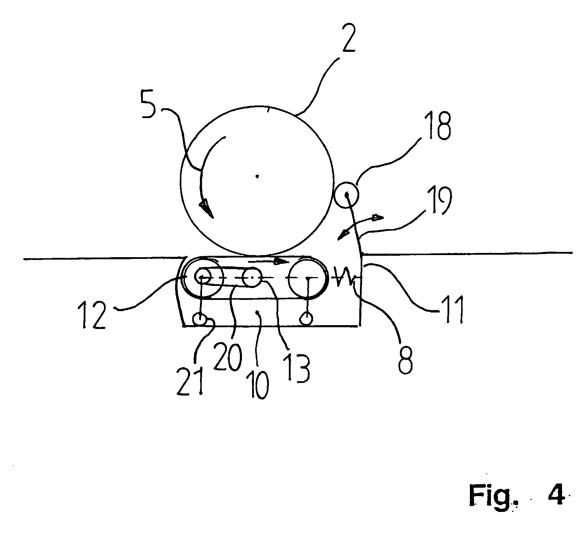

Schließlich zeigt Fig. 4 in schematischer Seitenansicht einen weiteren Bremsprüfstand, wobei dort zur Vermeidung eines Wegdrückens des Rades 2 beim Bremsen ein ganz besonderes Stützrad 18 vorgesehen ist, welches mit Stützarmen 19 in seiner hochgefahrenen Stützposition gehalten wird. Das Stützrad 18 rollt am drehenden Rad 2 und verhindert ein Wegschieben des Rades 2 entgegen der Fahrtrichtung, d.h. nach hinten. Der dort vorgesehene Messwertaufnehmer bzw. die vorgesehene Kraftmesseinrichtung 8 wirkt zwischen dem in der Fig. nicht gezeigten Rahmen und der Wandung 11 der Bodenausnehmung 10. Des Weiteren sind dort Horizontallager 21 zur besseren Verschiebbarkeit der Abrolleinrichtung 1 bzw. des Rahmens vorgesehen. Der zum Antrieb einer der Rollen 12 dienende Elektromotor 13 ist zwischen den beiden Rollen 12 angeordnet und treibt eine der beiden Rollen 12 über einen Riemen 20 an.

## Patentansprüche

1. Bremsprüfstand für Kraftfahrzeuge, mit einer eine Lauffläche (3) aufweisenden Abrolleinrichtung (1) zum Abrollen der Räder (2), wobei die Lauffläche (3) drehangetrieben und blockierbar bzw. bremsbar ist, wobei die Abrolleinrichtung (1) längs der Fahrtrichtung (6) zumindest geringfügig beweglich gelagert ist, wobei zur Ermittlung der Bremskraft die beim Bremsen zwischen der Abrolleinrichtung (1) und einem vorgebbaren Fixpunkt (7) wirkende Kraft messbar ist, wobei die Abrolleinrichtung (1) in einem am oder im Boden festlegbaren Rahmen (9) gelagert ist und wobei zur Ermittlung der Bremskraft die beim Bremsen zwischen dem Rahmen (9) und der Abrolleinrichtung (1) wirkende Kraft messbar ist,
**dadurch gekennzeichnet, dass** die Abrolleinrichtung (1) gemeinsam mit dem Rahmen (9) handhabbar und - als kompakte Einheit - beliebig auf dem Boden einer Werkstatt positionierbar ist.

2. Bremsprüfstand nach Anspruch 1, **dadurch gekennzeichnet, dass** je Rad (2) einer Achse eine separate Abrolleinrichtung (1) vorgesehen ist, wobei jede der beiden Abrolleinrichtungen (1) einem separaten Rahmen (9) zugeordnet sein kann.

3. Bremsprüfstand nach Anspruch 1 oder 2, **dadurch gekennzeichnet, dass** die Abrolleinrichtung (1) mindestens zwei Rollen (12) bzw. Walzen, vorzugsweise drei oder mehrere Rollen (12) bzw. Walzen, umfasst und dass über bzw. um die Rollen (12) ein als Endlosband ausgeführtes Laufband (16) läuft.

4. Bremsprüfstand nach Anspruch 3, **dadurch gekennzeichnet, dass** die Rollen (12) seitlich im Rahmen (9) gelagert sind und bodenfrei laufen, vorzugsweise seitlich in Wälzlagern oder in Gleitführungen geführt sind.

5. Bremsprüfstand nach Anspruch 3 oder 4, **dadurch gekennzeichnet, dass** in Laufrichtung gesehen vor der ersten Rolle (12), d.h. hinter dem auf der Abrolleinrichtung (1) befindlichen Rad (2), eine frei laufende Stützrolle (18) angeordnet ist, gegen die sich das Rad (2) beim Bremsen abstützt.

6. Bremsprüfstand nach Anspruch 5, **dadurch gekennzeichnet, dass** die Stützrolle (18) über seitliche Stützarme (19), vorzugsweise elastisch bzw. federkraftbeaufschlagt, in der Stützposition derart gehalten ist, dass sie vom Reifen (2) in Fahrtrichtung unter Überwindung der Federkraft absenkbar und nach dem Überfahren automatisch in die Stützposition aufrichtbar ist.

7. Bremsprüfstand nach Anspruch 5, **dadurch gekennzeichnet, dass** die Stützrolle (18) in einem abgesenkten Zustand überfahrbar und nach dem Überfahren, vorzugsweise bei auf der Abrolleinrichtung (1) positioniertem Rad (2), in die Stützposition hochfahrbar und ggf. dort arretierbar ist.

8. Bremsprüfstand nach Anspruch 7, **dadurch gekennzeichnet, dass** die Stützrolle (18) über eine Mechanik, vorzugsweise über einen Schneckenantrieb, von der abgesenkten Position in die Stützposition verbringbar ist.

9. Bremsprüfstand nach einem der Ansprüche 3 bis 8, **dadurch gekennzeichnet, dass** die Kraftaufnahme zwischen den Rollen (12) und dem Rahmen (9) oder innerhalb der Rollen (12) oder in oder an den Lagern der Rollen (12) erfolgt.

10. Bremsprüfstand nach einem der Ansprüche 1 bis 7, **dadurch gekennzeichnet, dass** zum Antrieb mindestens einer der Rollen (12) ein Elektromotor (13) vorgesehen ist, wobei der Elektromotor (13) im Bereich zwischen den Rollen (12) angeordnet oder im Bereich unter den Rollen (12) oder in einer der angetriebenen Rolle (12) bzw. in den angetriebenen Rollen (12) angeordnet und integraler Bestandteil der Rolle (12) sein kann.

## Claims

1. Brake test stand for motor vehicles, having a rolling device (1), which has a running surface (3), for the rolling of the wheels (2), the running surface (3) being rotationally driven and lockable or brakable, the rolling device (1) being supported to be movable at least slightly in the direction of travel (6), the force which acts between the rolling device (1) and a predeterminable fixed point (7) during braking being measurable in order to ascertain the braking force, the rolling device (1) being supported in a frame (9) securable to or in the floor, and the force which acts between the frame (9) and the rolling device (1) during braking being measurable in order to ascertain the braking force,
**characterised in that** the rolling device (1) can be manipulated together with the frame (9) and can be positioned as desired - as a compact unit - on the floor of a workshop.

2. Brake test stand according to claim 1, **characterised in that** a separate rolling device (1) is provided for each wheel (2) of an axle, each of the two rolling devices (1) being able to be associated with a separate frame (9).

3. Brake test stand according to claim 1 or 2, **characterised in that** the rolling device (1) comprises at least two rollers (12), or rolls, preferably three or more rollers (12), or rolls, and **in that** a moving belt (16) in the form of an endless belt runs over or around the rollers (12).

4. Brake test stand according to claim 3, **characterised in that** the rollers (12) are supported laterally in the frame (9) and run with floor clearance, and are preferably guided laterally in roller bearings or in sliding guides.

5. Brake test stand according to claim 3 or 4, **characterised in that**, viewed in the running direction, there is arranged in front of the first roller (12), that is to say, behind the wheel (2) located on the rolling device (1), a freely running support roller (18) against which the wheel (2) is supported during braking.

6. Brake test stand according to claim 5, **characterised in that** the support roller (18) is held in the support position by way of lateral support arms (19), preferably resiliently or under spring tension, in such a manner that it can be lowered by the tyre (2) in the direction of travel, overcoming the spring tension, and can be raised automatically into the support position after being driven over.

7. Brake test stand according to claim 5, **characterised in that** the support roller (18) can be driven over in a lowered state and, after being driven over, it can be raised into the support position, preferably with the wheel (2) being positioned on the rolling device (1), and optionally locked in position there.

8. Brake test stand according to claim 7, **characterised in that** the support roller (18) can be brought from the lowered position into the support position by means of a mechanism, preferably by means of a worm drive.

9. Brake test stand according to any one of claims 3 to 8, **characterised in that** the force pick-up takes place between the rollers (12) and the frame (9) or inside the rollers (12) or in or on the bearings of the rollers (12).

10. Brake test stand according to any one of claims 1 to 7, **characterised in that** an electrical motor (13) is provided to drive at least one of the rollers (12), the electrical motor (13) being able to be arranged in the region between the rollers (12) or in the region beneath the rollers (12) or in one of the driven rollers (12) or in the driven rollers (12) and being able to be an integral part of the roller (12).

## Revendications

1. Banc d'essai de frein pour véhicules automobiles, comprenant un dispositif de roulement (1) présentant une surface de roulement (3) pour le roulement des roues (2), la surface de roulement (3) étant entraînée en rotation et pouvant être bloquée ou freinée, le dispositif de roulement (1) étant monté de façon au moins légèrement mobile le long du sens de déplacement (6), la force agissant lors du freinage entre le dispositif de roulement (1) et un point fixe (7) prédéfinissable pouvant être mesurée pour la détermination de la force de freinage, le dispositif de roulement (1) étant monté dans un cadre (9) pouvant être fixé sur ou dans le sol et la force agissant lors du freinage entre le cadre (9) et le dispositif de roulement (1) pouvant être mesurée pour le calcul de la force de freinage, **caractérisé en ce que** le dispositif de roulement (1) peut être manipulé conjointement avec le cadre (9) et peut être positionné - en tant qu'unité compacte de façon quelconque sur le sol d'un atelier.

2. Banc d'essai de frein selon la revendication 1, **caractérisé en ce qu'**un dispositif de roulement (1) séparé est prévu par roue (2) d'un essieu, chacun des deux dispositifs de roulement (1) pouvant être attribué à un cadre (9) séparé.

3. Banc d'essai de frein selon la revendication 1 ou 2, **caractérisé en ce que** le dispositif de roulement (1) comprend au moins deux rouleaux (12) ou cylindres, de préférence trois ou plusieurs rouleaux (12) ou cylindres et **en ce qu'**une bande de roulement (16) réalisée sous forme de bande continue tourne au-dessus ou autour des rouleaux (12).

4. Banc d'essai de frein selon la revendication 3, **caractérisé en ce que** les rouleaux (12) sont guidés latéralement dans le cadre (9) et tournent sans sol, de préférence sont guidés latéralement dans des paliers de roulement ou dans des guides de glissement.

5. Banc d'essai de frein selon la revendication 3 ou 4, **caractérisé en ce que**, vu dans le sens de marche, en amont du premier rouleau (12), c'est-à-dire en aval de la roue (2) se trouvant sur le dispositif de roulement (1), est disposé un rouleau de soutien (18) tournant librement contre lequel la roue (2) s'appuie lors du freinage.

6. Banc d'essai de frein selon la revendication 5, **caractérisé en ce que** le rouleau de soutien (18) est sollicité au moyen de bras de soutien (19) latéraux, de préférence de façon élastique ou par la force d'un ressort, est maintenu dans la position de soutien de telle sorte qu'il peut être abaissé par le pneu (2) dans le sens de marche en surmontant la force de ressort et peut être relevé après le franchissement de façon automatique dans la position de soutien.

7. Banc d'essai de frein selon la revendication 5, **caractérisé en ce que** le rouleau de soutien (18) peut être franchi dans un état abaissé et, après le franchissement, peut être relevé dans la position de soutien et éventuellement arrêté à cet endroit, de préférence lorsque la roue (2) est positionnée sur le dispositif de roulement (1).

8. Banc d'essai de frein selon la revendication 7, **caractérisé en ce que** le rouleau de soutien (18) peut être amené au moyen d'un mécanisme, de préférence au moyen d'un entraînement à vis sans fin, de la position abaissée dans la position de soutien.

9. Banc d'essai de freinage selon l'une des revendications 3 à 8, **caractérisé en ce que** l'absorption de force s'effectue entre les rouleaux (12) et le cadre (9) ou à l'intérieur des rouleaux (12) ou dans ou sur les paliers des rouleaux (12).

10. Banc d'essai de frein selon l'une des revendications 1 à 7, **caractérisé en ce qu'**un moteur électrique (13) est prévu pour l'entraînement d'au moins un des rouleaux (12), le moteur électrique (13) pouvant être disposé dans la zone entre les rouleaux (12) ou pouvant être disposé dans la zone sous les rouleaux (12) ou dans l'un des rouleaux entraînés (12) ou dans les rouleaux entraînés (12) ou pouvant être un élément intégré du rouleau (12).
